# EUROPÄISCHE PATENTSCHRIFT

(11) **EP 0 523 009 B1**
(45) Veröffentlichungstag und Bekanntmachung des Hinweises auf die Patenterteilung: **20.04.1994**
(21) Anmeldenummer: 92810519.6
(22) Anmeldetag: 08.07.1992
(51) Int. Cl.: C05F 17/02

(54) **Kompostieranlage**
Composting installation
Installation de compostage

(30) Priorität: 11.07.1991 CH 2073/91
(43) Veröffentlichungstag der Anmeldung: 13.01.1993
(73) Patentinhaber: JOST AG HEIMBERG MASCHINENFABRIK Förder- und Aufbereitungstechnik, CH-3627 Heimberg (CH)
(72) Erfinder: Birrer, Joseph, CH-3608 Thun (CH)
(74) Vertreter: AMMANN PATENTANWAELTE AG BERN

(56) Entgegenhaltungen:
- FR-A- 1 583 541
- US-A- 3 438 740
- US-A- 4 828 399
- US-A- 4 869 877

## Beschreibung

Die Erfindung betrifft eine Kompostieranlage nach dem Oberbegriff des Patentanspruches 1.

Kompost ist eine aus tierischen und/oder planzlichen Abfällen durch Verrottung entstehende krümelige Masse, die als Dünger und als Bodenverbesserer Verwendung findet. Insbesondere werden heute in grossem Massstab Haushaltabfälle nach Abscheidung nichtkompostierbarer Materialien und nach Vermischung mit zerkleinerten Holzabfällen der Kompostierung zugeführt, wo das Rohmaterial in feuchtem Milieu und bei Luftzutritt durch Einwirkung von Mikroorganismen zu einem humusähnlichen Produkt abgebaut wird. Dabei tritt ein Volumenverlust und teilweise auch ein Masseverlust von insgesamt 40 - 50 % auf.

Zur Kompostierung werden die Abfälle auf bereits bekannte Weise wie folgt vorbereitet.

Der im Lastwagen angelieferte Hausmüll, d.h. insbesondere Küchenabfälle, wird nach eventueller Zwischenlagerung gemahlen, mittels Magneten von Eisenteilen und dann in einem Scheibensieb ("disc screen") von Kunststoffteilen befreit. In einer Feinmühle werden die gereinigten Abfälle und in einer anderen Feinmühle die Holzanteile weiter zerkleinert. Die beiden Bestandteile werden im gewünschten Mengenverhältnis gemischt, die Mischung befeuchtet und dann einem Flachkomposter zugeführt, dessen grundsätzlicher Aufbau aus dem Oberbegriff des Patentanspruchs 1 hervorgeht.

Der genannte Flachkomposter und die Misch- und Austragsvorrichtung, die im folgenden als "Agitator" bezeichnet wird, sind aus den US-A-4,869,877 bzw. 4,828,399 bekannt. Es hat sich jedoch gezeigt, dass der Aufbau und Betrieb dieser Kompostieranlage Nachteile aufweist, die ihrer Anwendung in vielen Fällen entgegenstehen.

Der Platzbedarf der Anlage ist zu gross, um sie überall einsetzbar zu machen. Dieser erhöhte Platzbedarf wird dadurch verursacht, dass sowohl der Aufgabe- als auch der Austragsraum des Kompostes wegen der Betriebserfordernisse sehr gross sein müssen.

Weiterhin muss die bekannte Anlage, die sich in einer Halle befindet, mit weit offenen Toren betrieben werden, um die Ein- und Ausfahrt von Transportfahrzeugen zu ermöglichen. Nach den geltenden Umweltvorschriften darf eine Kompostieranlage nicht an freier Luft betrieben werden, sondern sie muss praktisch hermetisch geschlossen sein, wobei die Abluft geruchsfrei gemacht werden muss.

Aufgabe der Erfindung ist es, die oben aufgezählten Nachteile auszuschalten und eine kleinere, aber durchsatzmässig gleiche Anlage gegenüber einer bekannten Anlage zu schaffen.

Zur Lösung dieser Aufgabe wird eine Kompostieranlage mit den Merkmalen im Kennzeichen des Patentanspruches 1 vorgeschlagen.

Besondere Ausführungsformen sind in den abhängigen Anspruchen definiert.

Indem ein Mischwagen am Anfang der Mulden und ein zwei Aufgaben dienender Transferwagen am Ende der Mulden eingebaut sind, lässt sich der Platzbedarf am Vorderende des Kompostierfeldes von bisher 20 m auf ca. 4 m und derjenige am Hinterende des Kompostierfeldes von 6 m auf jetzt ca. 3,5 m verringern. Dabei beziehen sich die Begriffe "Anfang" bzw. "Vorderende" und "Ende" bzw. "Hinterende" auf die Durchsatzrichtung der Kompostiermischung bis zum fertigen Kompost.

Weiterhin ist durch die Verwendung geschlossener, nach aussen führender bzw. von aussen kommender Förderbänder dafür gesorgt, dass keine Gerüche aus der Halle austreten. In bekannter Weise ist die Halle mit mindestens einem Abluftventilator versehen, der die Luft aus der Halle abzieht und durch ein an sich bekanntes Biofilter leitet, bevor sie an die Atmosphäre abgegeben wird.

Es sollen nun besondere Ausführungsformen des Erfindungsgegenstandes an Hand von Beispielen besprochen werden. Dabei wird auf die Zeichnung Bezug genommen, worin zeigen:
Figur 1 eine teilweise im Schnitt dargestellte Seitenansicht einer ersten Ausführungsform;
Figur 2 eine Ansicht einer Variante eines erfindungsgemässen Misch- und Füllwagens in der Darstellung wie Figur 1,
Figur 3 eine Frontansicht einer Variante des Austragssystems, und
Figur 4 eine Ansicht einer Variante des Transferwagens in der Darstellung wie in Figur 1.

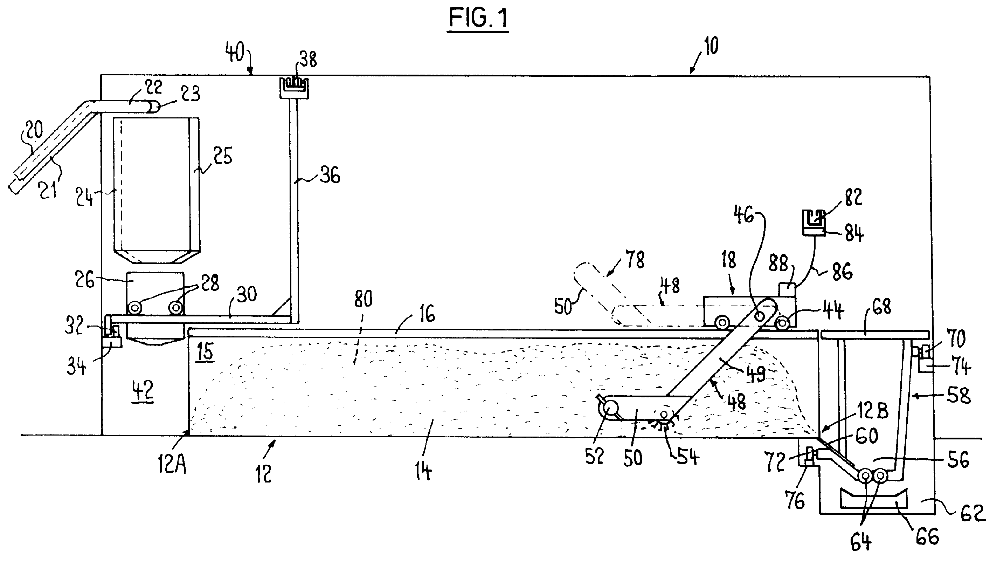

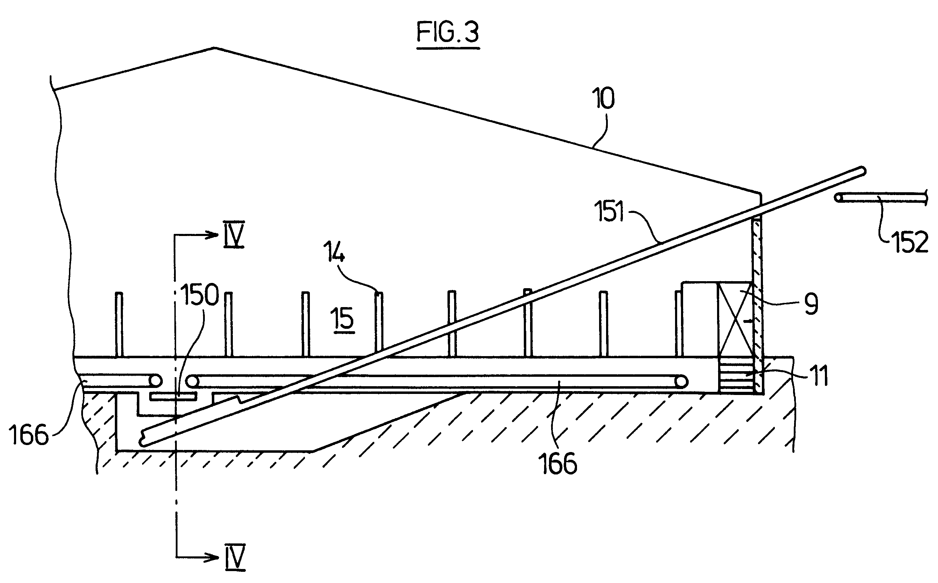

In einer allseits geschlossenen, mit mindestens einem (nicht gezeigten) Dachventilator versehenen Halle 10 (Figur 1), befindet sich das eigentliche, etwa 50 - 60 m lange Kompostierfeld 12, das bei 12A beginnt und bei 12B endet. Es ist durch senkrechte Trennwände 14 in mehrere, beispielsweise zehn Mulden oder Buchten 15 (Fig. 3) ("bays") geteilt, die eine Breite von 1,5 bis 3 m aufweisen und vorn, hinten und oben offen sind. Auf der Krone jeder Trennwand 14 befindet sich eine Fahrschiene 16 für einen Agitator 18, der später genauer beschrieben wird.

Am Vorderende der Halle 10 ist ein Förderband 20 für frisch aufzugebende Kompostiermischung angeordnet, das geschlossen ist und dicht durch die Wand der Halle 10 geführt ist. Das Förderband 20 endet waagrecht bei 22 über einem Vorratssilo 24, der als Speicher für den von einer nicht dargestellten Mühle kommenden Grünkompost (Haushaltmüll) und dessen absatzweiser Abgabe in einen Misch- und Füllwagen 26 dient, der unter dem Silo verfahrbar ist. Zur Zufuhr von Holzabfällen, die dem Grünkompost zuzumischen sind, ist ein zweites, analoges Förderband 21 vorgesehen, dessen waagrechter Teil 23 in der Halle über einem zweiten Silo 25 endet. Der Misch- und Füllwagen 26 mit nicht gezeigtem Mischer ist einerseits in Längsrichtung mittels Rädern 28 auf Schienen 30 über den Anfang einer Mulde 15 verfahrbar. Ausserdem kann er in einem die Schienen 30 enthaltenden Gerüst auch quer verfahren werden, nämlich mit Rädern 32 auf einer Schiene 34 und über ein Gestänge 36 an einer Kranschiene 38, die unter der Decke 40 der Halle 10 aufgehängt ist.

Damit kann der Misch- und Füllwagen 26 unter einen der Silos 24 und 25 gefahren werden. In ihn wird eine vorbestimmte Menge Grünkompost bzw. Holzschrot mittels einer nicht dargestellten Waage dosiert. Dann wird der Wagen 26 unter den anderen Silo gebracht und erhält in gleicher Weise eine vorbestimmte Menge der anderen Kompostierungskomponente. Anschliessend gelangt der Misch- und Füllwagen 26 über den Anfang einer ausgewählten Mulde 15, wo er seine Ladung, die vom eingebauten Mischer unterdessen gemischt worden ist, abgibt und wieder unter einen Silo 24, 25 zurückkehren kann.

Wegen der kompakten Ausgestaltung des Raumes 42 zwischen vorderer Hallenwand und dem Beginn 12A der Mulden 15 ist nur ein Längsmass von ca. 5 - 6 m gegenüber einem solchen von mindestens 20 m bei den bekannten Anlagen erforderlich, und auch dank der erfindungsgemässen Massnahme, den Wagen zur Umsetzung des Agitators 18, der anschliessend beschrieben ist, an das Ende der Mulden 15 zu setzen.

Der Agitator 18 ist an sich bereits bekannt. Er dient dazu, die in Kompostierung befindliche Mischung 80 in den Mulden umzuwälzen, nach und nach an das Ende 12B der Mulden zu bringen und schliesslich den fertigen Kompost auszutragen. Dieser Wagen 18 ist auf jeweils zwei benachbarten Schienen 16 über einer Mulde auf Rädern 44 verfahrbar und trägt einen um eine Achse 46 schwenkbaren Ausleger 48 mit einem endständigen Arm 50. Am freien Ende des Arms 50 ist ein Mischrad 52 drehbar gelagert und angetrieben. Im Ausleger 48 befindet sich eine umlaufende Transportvorrichtung 49, deren unteres Umlenkende 54 zu sehen ist. Diese Transportvorrichtung dient zum Umsetzen der Kompostiermischung, indem diese von vor dem Agitator über ihn hinweg gefördert und hinter ihm wieder abgeworfen wird, und zuvor zum Austrag des Kompostes, wenn der Agitator 18 seine Arbeit bei 12B beginnt.

Dieser Austrag fällt in den Trog 56 des Transferwagens 58, der am Ende der Mulden 15 quer verfahrbar angeordnet ist und mehrere Mulden bedient. Ein am Ende der Mulden 15 quer angebrachtes Leitblech 60 verhindert, dass Kompost in die Wagengrube 62 fällt. Am tiefsten Punkt des Troges 56 sind rotierende Austragspaddel 64 eingebaut. Quer unter die Mulden 15 ist ein Förderband 66 in der Wagengrube 62 angeordnet. Der Transferwagen trägt ein Schienenpaar 68, welches die Verlängerung eines Paares von Schienen 16 bildet. Der Transferwagen 58 ist quer zur Muldenrichtung mittels Rädern 70 bzw. 72 auf Schienen 74 und 76 verfahrbar.

Die Funktionsweise der Teile 20 bis 38 ist bereits beschrieben worden. Es soll nun die Arbeitsweise des Agitators und des Transfer- und Austragswagens beschrieben werden.

Wenn der Füllwagen 26 sich in der gezeigten Position oder vor einer anderen Mulde befindet, steht der Agitator 18 zunächst noch auf dem Wagen 58. Nun wird der Ausleger 48 in seine gezeigte unterste Stellung abgelassen, und die Kompostiermischung wird vom Schaufelrad 52 umgewälzt und von der Transportvorrichtung 49 "über Kopf" in den Trog 56 des Transferwagens 58 abgeworfen. Hierbei handelt es sich um Fertigkompost, der am Ende der Mulde 15 angekommen ist. Der Agitator beginnt nun seine Fahrt nach links (Figur 1) und gelangt auf ein Schienenpaar 16, das mit den Wagenschienen 68 fluchtet. Wenn der Agitator 18 bei seiner Fahrt von rechts nach links (Figur 1) so weit gefahren ist, dass der umgeför-derte Kompost nicht mehr in den Trog 56 fällt, d.h. etwa in der gezeichneten Stellung, hat er den Bereich des Wagens 58 verlassen, und dieser kann nun eine andere Mulde aufsuchen.

Der in den Trog 56 des Transferwagens 58 abgeworfene Kompost wird von den Austragspaddeln 64 auf das Förderband 66 abgelegt. Das Band 66 fördert den Kompost luftdicht aus der Halle 10 hinaus, wo er weitertransportiert oder gebunkert wird.

Am Ende seiner Arbeit, im Bereich 12A der Mulde 15, ist der Agitator 18 über eine andere Mulde zu bringen. Zu diesem Zweck wird er nach Beendigung der Austragstätigkeit bei hochgeschwenktem Ausleger 78 wieder nach rechts (Figur 1) auf das Schienenpaar 68 des Wagens 58 verfahren. Nun kann der Wagen 58 quer zu den Mulden 15 bewegt werden, bis er am Schienenpaar 16 einer anderen Mulde angekommen ist. Die Schienen 68 und 16 werden fluchtend miteinander verriegelt, und der Agitator 18 kann in der gewählten neuen Mulde arbeiten.

In der Figur sind Hilfs- und Steuereinrichtungen sowie die Stromversorgungen im allgemeinen nicht dargestellt. Dem Wagen 26 kann der Arbeits- und Steuerstrom über Schleifkontakte bei 34 oder 38 oder aber von der Seite zugeführt werden; im letzteren Falle ist eine Kabelwickeltrommel vorzusehen.

Nach weiterer Erfindung erhält der Agitator 18, der ja in der gezeigten Ausführungsform doppelt, der Transferwagen 58 aber nur einfach vorhanden ist, eine vom Wagen 58 unabhängige Stromversorgung. Zu diesem Zwecke ist ein querlaufender Träger 82 mit einer angetriebenen, positionierbaren Stromkatze 84 vorgesehen, welche den Strom mit Schleifkontakten oder über ein Hängekabel (nicht gezeigt) erhält. Der Agitator ist über ein Hängekabel 86, das sich auf einer Wickeltrommel 88 befindet, mit der Stromkatze 84 verbunden.

Es ist vorgesehen, zehn Mulden anzuordnen, wobei ein Transferwagen 58, aber zwei Agitatoren, einer für jeweils fünf Mulden, vorhanden sind. Aber auch eine andere Anzahl von Mulden ist möglich.

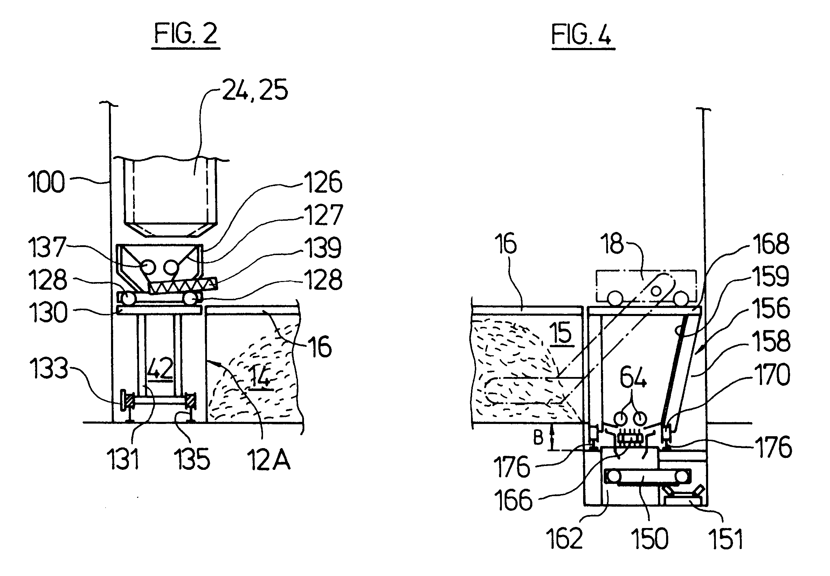

In Figur 2 ist eine Variante des oben beschriebenen Misch- und Füllwagens 26 gezeigt, die sich durch eine einfachere Konstruktion auszeichnet.

Der Misch- und Füllwagen 126, dessen oberer Teil im Schnitt dargestellt ist, weist eine oben offene Mulde 127 auf, die zur Aufnahme der zu kompostierenden Stoffe bestimmt ist, z.B. Grünkompost oder Holzschrot. Diese Stoffe werden wiederum aus den Silos 24, 25 in den Misch- und Füllwagen abgegeben. Mittels Rädern 128 ist der Misch- und Füllwagen 126 auf Schienen 130 verfahrbar. Im Gegensatz zur Ausführungsform gemäss Figur 1 fluchten die Schienen 130 mit den Schienen 16 des Agitators 18 (vgl. Fig. 1) die, wie beschrieben, auf den Kronen der Trennwände 14 befestigt sind.

Die Schienen 130 des Misch- und Füllwagens 126 bilden einen Teil eines Gestells 131, das unten mit Rädern 133 auf Schienen 135 quer zu den Trennwänden 14 im Raum 42 zwischen der vorderen Hallenwand 100 und dem Beginn 12A der Trennwände 14 und der zugehörigen Kompostierungsmulden verfahrbar ist. Damit der Raum 42 ohne Hindernisse begeh- und befahrbar bleibt, können die Schienen 135 auch in den Boden eingelassen werden.

Der in den Misch- und Füllwagen eingefüllte Grünkompost kann, wenn der Misch- und Füllwagen von seinen Schienen 130 auf die Schienen 16 der Kompostiermulden gefahren ist, durch die Fördervorrichtung 137 nach unten ausgegeben werden. Damit der Misch- und Füllwagen aber nicht zu weit auf die Schienen 16 gefahren werden muss, ist er mit einer nach vorn fördernden Transportschnecke 139 versehen, die den Grünkompcst aus der Mulde 127 über den Wagenanfang hinaus auf die Kompostiermulde fördert.

Figur 3 zeigt nun in Frontansicht ein bevorzugtes Austragssystem zur Förderung des fertigen Kompostes aus der Halle 10.

Die vom Transferwagen 58 oder vom noch zu beschreibenden anderen Transferwagen 158 nach unten ausgegebene Fertigkompostmasse fällt auf ein Förderband 166. Wie schon erwähnt, sind in der Halle 10 im allgemeinen 10 Kompostiermulden 15 vorgesehen, die in zwei Sektoren von je 5 Mulden eingeteilt sind. Jeder Sektor besitzt seinen eigenen Agitator 18. Demgemäss ist jedem der beiden Sektoren auch ein Förderband 166 zugeordnet, wobei die beiden Förderbänder 166 jeweils in Richtung Hallenmitte fördern. In Hallenmitte und unter den Enden der Bänder 166 ist ein Uebergabeförderer 150 angeordnet, der den von den Bändern 166 angelieferten Kompost sammelt und ihn an ein Austrags-Förderband 151 übergibt, das als Schrägförderer ausgebildet ist und den fertigen Kompost aus der Halle 10 bringt, wie in Figur 3 gut zu sehen ist. Der Kompost kann dann in Silos, direkt auf Lastwagen oder in Güterwagen oder, wie gezeigt, auf ein weiteres Förderband 152 übergeben werden.

Bevorzugt werden als Förderbänder an sich bekannte Kratzförderer eingesetzt; es hat sich gezeigt, dass solche Vorrichtungen den Kompost am günstigsten bewegen können. Dies gilt insbesondere für die Förderbänder 166.

In Figur 4 ist schliesslich eine andere Ausführungsform eines Transferwagens 158 (entspricht dem Wagen 58 in Figur 1) gezeigt, die sich im wesentlichen durch eine einfachere und stabilere Konstruktion im Hinblick auf die Verfahrbarkeit auszeichnet.

Der Transferwagen 158 besitzt eine gegen die Kompostiermulde 15 offene Mulde 156 und wie der Transferwagen 58 Schienen 168, die mit den Schienen 16 der Kompostiermulden 15 fluchten. Die Räderpaare 170 befinden sich am Transferwagen 158 etwa auf gleicher Höhe und demgemäss auch die Schienen 176 im Raum 162 auf etwa gleicher Höhe. Die Anordnung des Austragssystems entspricht derjenigen gemäss Figur 3. Auch bei dieser Ausführungsform fährt zum Zwecke des Austragens von fertigem Kompost der gestrichelt gezeichnete Agitator 18 auf die Schienen 18 des Transferwagens.

Im Rahmen des Beanspruchten können zahlreiche Aenderungen und Anpassungen, die im Wissen und Können des Fachmannes liegen, angebracht werden. Beispielsweise kann man auch den Silo 24 quer zu den Mulden verfahrbar anordnen, braucht dann aber ein zusätzliches querliegendes und obenliegendes Förderband.

Durch die neuartige Gestaltung der Transfer- und Austragwagen 58 bzw. 158 ist es möglich, die Breite des Raumes zwischen Muldenende 12B und Hinterwand der Halle von bisher 6 m auf ca. 3,5 m und dessen Tiefe von bisher 3 m auf etwa 2 m zu verkleinern, was die Kosten und den Platzbedarf weiter senkt.

Die Erfindung sieht weiter vor, das gesamte Regen- und Betriebswasser, insbesondere Waschwasser, der Kompostieranlage zu sammeln und zum Anfeuchten der Kompostiermischung zu verwenden. Dadurch wird der Betrieb der Anlage weiter verbilligt und die Umwelt geschont.

## Patentansprüche

1. Kompostieranlage mit einem Kompostierfeld in einer Halle, das durch längsgerichtete Trennwände in mehrere oben und mindestens hinten offene langgestreckte Mulden geteilt ist, wobei mindestens ein Misch- und Austragswagen horizontal auf zwei benachbarten Trennwänden vom vorderen, zum Eintrag von kompostierbarer Masse bestimmten Muldenende bis zum hinteren, zum Austrag des Kompostes dienenden Muldenende und in Gegenrichtung verfahrbar sowie über andere Mulden versetzbar vorgesehen ist, gekennzeichnet durch einen Misch- und Zufuhrwagen (26; 126) zur Aufnahme frischer Kompostiermischung und zu deren Aufgabe in den Muldenanfang (12A), wobei der Wagen (26; 126) in einem Raum (42) zwischen der vorderen Stirnwand der Halle (10) quer zu den Mulden (15) und weiterhin senkrecht dazu über den Anfangsbereich einer Mulde verfahrbar ist, und durch einen Transferwagen (58; 158), der in einem Raum (62) zwischen dem Ende (12B) der Mulden und der hinteren Stirnwand der Halle quer zu den Mulden (15) verfahrbar ist und mit Mitteln (68) zur Aufnahme des Misch- und Austragswagens (18) sowie mit Mitteln (56; 156) zur Aufnahme des Fertigkompostes und dessen Austrag nach unten versehen ist.

2. Kompostieranlage nach Anspruch 1, dadurch gekennzeichnet, dass die Halle (10) zumindest während des Betriebs allseits im wesentlichen dicht geschlossen ist.

3. Kompostieranlage nach Anspruch 1 oder 2, gekennzeichnet durch zwei Vorratssilos (24, 25), unter die der Misch- und Zufuhrwagen (26; 126) verfahrbar ist, und zwei dicht durch die Hallenwandung geführte Transportvorrichtungen (20, 22; 21, 23) zum Beschicken des eines Silos (24) mit Grünkompost und des anderen Silos (25) mit Holzabfallteilchen.

4. Kompostieranlage nach einem der vorstehenden Ansprüche, dadurch gekennzeichnet, dass der Misch- und Zufuhrwagen (26; 126) horizontal auf Schienen (34, 38; 135) quer zur Muldenrichtung und auf Schienen (30; 130) in Muldenrichtung verfahrbar ist.

5. Kompostieranlage nach einem der vorstehenden Ansprüche, dadurch gekennzeichnet, dass der Misch- und Zufuhrwagen (26; 126) auf Schienen (32; 133, 135) quer zu den Mulden verfahrbar ist, und zwar unter einen Silo (24 oder 25), wo er Grünkompost in vorbestimmter Menge erhält, und dann unter den anderen Silo, wo er Holzabfallteilchen in vorbestimmter Menge erhält.

6. Kompostieranlage nach Anspruch 5, dadurch gekennzeichnet, dass der Transferwagen (58; 158) zur Aufnahme des Misch- und Austragswagens (18) ein oberes horizontales Schienenpaar (68; 168) trägt, das mit zwei benachbarten Schienen (16) fluchtet, auf denen der Misch- und Austragswagen (18) läuft und die auf der Krone jede! Muldentrennwand (14) angebracht sind.

7. Kompostieranlage nach einem der vorstehenden Ansprüche, dadurch gekennzeichnet, dass der Transferwagen (58; 158) mit einem Trog (56; 156) zur Aufnahme des Fertigkompostes und mit Austragspaddeln (64) am Grunde des Trogs (56) ausgerüstet ist.

8. Kompostieranlage nach einem der vorstehenden Ansprüche, gekennzeichnet durch ein quer zum Ende (12B) der Mulden (15) schräg angebrachtes, in den Trog (56) des Transferwagens (58) reichendes Leitblech (60) zur verlustfreien Ueberführung des Fertigkompostes.

9. Kompostieranlage nach einem der vorstehenden Ansprüche, gekennzeichnet durch ein im Raum (62) unter dem Transferwagen gen (58) quer zur Muldenrichtung angeordnetes, ins Auessere der Halle mit Abdichtung führendes Transportband (68) zur Ueberführung des Kompostes nach aussen.

10. Kompostieranlage nach einem der yorstehenden Ansprüche, mit mindestens zwei Misch- und Austragswagen (18), dadurch gekennzeichnet, dass nur ein Transferwagen (58) vorhanden und die Misch- und Austragswagen in ihrer Stromversorgung vom Transferwagen unabhängig sind.

11. Kompostieranlage nach Anspruch 10, dadurch gekennzeichnet, dass quer zu den Mulden (15) und über diesen ein Träger (82) aufgehängt ist, an dem eine Laufkatze läuft, die über Kabel oder Schleifkontakte mit einer äusseren Stromquelle und über ein Kabel (86) mit einem der Misch- und Austragswagen (18) verbunden ist.

12. Kompostieranlage nach einem der vorstehenden Ansprüche, dadurch gekennzeichnet, dass im Raum (162) unter dem Transferwagen (156) ein Kratzförderband (166) angeordnet ist, und dass zwei nach der Mitte der Halle (10) fördernde Kratzförderbänder (166) vorgesehen sind, die den von ihnen geförderten Fertigkompost auf ein Querförderband (150) und dann auf einen Schrägförderer (151) übergeben, der aus der Halle (10) nach aussen führt.

13. Kompostieranlage nach einem der vorstehenden Ansprüche, dadurch gekennzeichnet, dass der Misch- und Füllwagen (126) in Muldenrichtung auf Schienen (130) verfahrbar ist, die mit den Schienen (16) des Misch- und Austragswagens (18) fluchten.

## Claims

1. Composting installation, comprising a composting field in a hall, which field is divided by lengthwise separation walls into a plurality of bays which are open on the topside and at least at the backside, at least one agitating and conveying carriage being provided which is movable horizontally on two adjacent separation walls from the front bay end, destined to receive compostable matter, to the rear bay end serving for the delivery of the compost, and vice versa, and being equipped for a transfer to other bays, characterized by a mixing and supply carriage (26; 126) for receiving fresh composting matter and for discharging same into the beginning (12A) of the bay, the carriage (26; 126) being movable in a space (42) between the front end wall of the hall (10) transversely to the bays (15) and furthermore perpendicularly thereto on the front region of a bay, and by a transfer carriage (58; 158) being movable within a space (62) between the end (12B) of the bays and the rear end wall of the hall transversely to the bays (15) and being equipped with means (68) for receiving the agitating and conveying carriage (18) and with means (56; 156) for receiving the finished compost and conveying it downwards.

2. Composting installation according to claim 1, characterized by the fact that the hall (10) is substantially hermetically closed all over, at least during the composting operation.

3. Composting installation according to claim 1 or 2, characterized by two storage silos (24, 25) under which the mixing and supply carriage (26; 126) is movable, and by two conveying installations (20, 22; 21, 23) tightly traversing the hall wall destined to supply green compost to one silo (24) and wood waste particles to the other silo (25).

4. Composting installation according to any one of the preceding claims, characterized by the fact that the mixing and supply carriage (26; 126) is movable horizontally on rails (34, 38; 135) transversely to the bays, and on rails (30; 130) in the direction of the bays.

5. Composting installation according to any one of the preceding claims, characterized by the fact that the mixing and supply carriage (26; 126) is movable on rails (32; 133, 135) transversely to the bays, namely beneath a silo (24 or 25) where it receives a predetermined amount of green compost, and then beneath the other silo where it receives a predermined amount of wood waste particles.

6. Composting installation according to claim 5, characterized by the fact that the transfer carriage (58; 158) supports an upper horizontal pair of rails (68; 168) for receiving the agitating and conveying carriage (18), these rails being aligned to two adjacent rails (16) on which moves the agitating and conveying carriage (18) and which are fixed on the crest of the separation wall (14) of each bay.

7. Composting installation according to any one of the preceding claims, characterized by the fact that the transfer carriage (58; 158) is equipped with a trough (56; 156) for receiving finished compost, and with discharging paddles (64) at the bottom of the trough (56).

8. Composting installation according to any one of the preceding claims, characterized by a baffle plate (60) slantingly fixed transversely to the end (12B) of the bays and extending into the trough (56) of the transfer carriage (58) for the transfer of the finished compost without losses.

9. Composting installation according to any one of the preceding claims, characterized by a conveying belt (68) mounted in the space (62) beneath the transfer carriage (58) transversely to the bay direction and sealingly leading to the exterior of the hall for the transfer of the compost to the outside.

10. Composting installation according to any one of the preceding claims, comprising at least two mixing and supply carriages (18), characterized by the fact that only one transfer carriage (58) is provided and that the power supply of the mixing and supply carriages is independent from the transfer carriage.

11. Composting installation according to claim 10, characterized by the fact that a support rail (82) is suspended transversely to the bays (25) and above them, a trolley being movable along the support rail which is connected by cable or sliding contacts to an outer power source and by a cable (86) to one of the mixing and supply carriages (18).

12. Composting installation according to any one of the preceding claims, characterized by the fact that a scratching conveyor belt (166) is arranged in the space (162) under the transfer carriage (156), and that two scratching conveyor belts (166) are provided which convey towards the center of the hall (10) and which transfer the conveyed finished compost onto a cross conveyor belt (150) and then onto an inclined conveyor (151) which leads from the inside of the hall (10) to the outside.

13. Composting installation according to any one of the preceding claims, characterized by the fact that the mixing and supply carriage (126) is movable in the direction of the bays on rails (130) which are aligned with the rails (16) of the agitating and conveying carriage (18).

## Revendications

1. Installation de compostage, comprenant dans un hall un champ de compostage divisé selon la longueur par des cloisons en plusieurs baies ouvertes vers le haut et au moins vers l'arrière, au moins un chariot d'agitation et de décharge étant prévu pouvant se déplacer horizontalement sur deux cloisons voisines depuis le bout avant de la baie, destiné au chargement de masse compostable, jusqu'au bout arrière de la baie servant à l'évacuation du compost, et en sens inverse, et pouvant être placé sur d'autres baies, caractérisée par un chariot de mélange et d'alimentation (26; 126) pour recevoir un mélange frais à composter et pour sa décharge dans le début de la baie (12A), ce chariot (26; 126) pouvant se déplacer dans un espace (42) entre la paroi frontale avant du hall (10) transversalement aux baies (15) et encore perpendiculairement à ce mouvement, sur la région initiale d'une baie, et par un chariot de transfert (58; 158) pouvant se déplacer, dans un espace (62) entre la fin des baies (12B) et la paroi frontale arrière du hall, transversalement aux baies (15) et comportant des moyens (68) pour recevoir le chariot d'agitation et de décharge (18) et des moyens (56; 156) pour recevoir le compost fini et pour le décharger vers le bas.

2. Installation de compostage selon la revendication 1, caractérisée en ce que le hall (10) est fermé partout substantiellement étanche, au moins pendant l'opération.

3. Installation de compostage selon la revendication 1 ou 2, caractérisée par deux silos de stockage (24, 25) au-dessous desquels le chariot de mélange et d'alimentation (26; 126) peut se déplacer, et par deux dispositifs de transport (20, 22; 21, 23) traversant la paroi du hall de manière étanche, pour alimenter l'un des silos (24) avec du compost vert, et l'autre silo (25) avec des particules de déchets de bois.

4. Installation de compostage selon l'une quelconque des revendications précédentes, caractérisée en ce que le chariot de mélange et d'alimentation (26; 126) peut se déplacer sur rails (34, 38; 135) transversalement à la direction des baies, et sur rails (30; 130) dans la direction des baies.

5. Installation de compostage selon l'une quelconque des revendications précédentes, caractérisée en ce que le chariot de mélange et d'alimentation (26; 126) peut se déplacer sur rails (32; 133, 135) transversalement aux baies, à savoir au-dessous d'un silo (24 ou 25) où il reçoit une quantité prédéterminée de compost vert, et puis au-dessous de l'autre silo où il reçoit une quantité prédéterminée de particules de déchets de bois.

6. Installation de compostage selon la revendication 5, caractérisée en ce que le chariot de transfert (58; 158) porte en haut une paire de rails (68; 168) pour recevoir le chariot d'agitation et de décharge (18), ces rails étant alignés à deux rails (16) voisins sur lesquels se déplace le chariot d'agitation et de décharge (18) et qui sont fixés sur le couronnement de chaque cloison (14).

7. Installation de compostage selon l'une quelconque des revendications précédentes, caractérisée en ce que le chariot de transfert (58; 158) est équipé d'un bac (56; 156) pour recevoir le compost fini et de pales de décharge (64) au fond du bac (56).

8. Installation de compostage selon l'une quelconque des revendications précédentes, caractérisée par un déflecteur (60) fixé en biais transversalement à la fin (12B) des baies (15) et s'étendant dans le bac (56) du chariot de transfert (58), pour le transfert sans pertes du compost fini.

9. Installation de compostage selon l'une quelconque des revendications précédentes, caractérisée par un convoyeur à bande (68) arrangé dans l'espace (62) au-dessous du chariot de transfert (58) transversalement à la direction des baies et menant de façon étanche à l'extérieur du hall, pour le transfert du compost vers l'extérieur.

10. Installation de compostage selon l'une quelconque des revendications précédentes, comportant au moins deux chariots d'agitation et de décharge (18), caractérisée en ce qu'un seul chariot de transfert (58) est prévu et que les chariots d'agitation et de décharge sont indépendants, quant à leur alimentation en courant, du chariot de transfert.

11. Installation de compostage selon la revendication 10, caractérisée en ce qu'un longeron (82) est suspendu transversalement aux baies (15) et au-dessus d'elles, supportant un chariot roulant relié par câble ou contacts frotteurs à une source de courant extérieure et par un câble (86) à l'un des chariots d'agitation et de décharge (18).

12. Installation de compostage selon l'une quelconque des revendications précédentes, caractérisée en ce qu'un convoyeur racleur (166) est disposé au-dessous du chariot de transfert (156), et que deux convoyeurs racleurs (166) sont prévus qui transportent vers le centre du hall (10) et qui transfèrent le compost fini qu'ils transportent, à un convoyeur à bande transversal (150) et puis à un convoyeur incliné (151) menant du hall (10) à l'extérieur.

13. Installation de compostage selon l'une quelconque des revendications précédentes, caractérisée en ce que le chariot de mélange et d'alimentation (126) peut se déplacer dans le sens des baies sur des rails (130) qui sont alignés aux rails (16) du chariot d'agitation et de décharge (18).
